(19) Europäisches Patentamt
European Patent Office
Office européen des brevets

(11) **EP 4 418 140 A1**

(12) **EUROPEAN PATENT APPLICATION**
published in accordance with Art. 153(4) EPC

(43) Date of publication:
**21.08.2024 Bulletin 2024/34**

(21) Application number: **22880377.1**

(22) Date of filing: **13.10.2022**

(51) International Patent Classification (IPC):
***G06F 16/33*** *(2019.01)*

(52) Cooperative Patent Classification (CPC):
**G06F 16/33**

(86) International application number:
**PCT/CN2022/125081**

(87) International publication number:
**WO 2023/061441 (20.04.2023 Gazette 2023/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2021 CN 202111194504
13.10.2021 CN 202111193343**

(71) Applicant: **Origin Quantum Computing
Technology
(Hefei) Co., Ltd
Hefei, Anhui 230088 (CN)**

(72) Inventors:
• **DOU, Menghan**
**Hefei, Anhui 230088 (CN)**
• **KONG, Xiaofei**
**Hefei, Anhui 230088 (CN)**
• **LI, Lei**
**Hefei, Anhui 230088 (CN)**
• **FANG, Yuan**
**Hefei, Anhui 230088 (CN)**

(74) Representative: **Rau, Schneck & Hübner
Patentanwälte Rechtsanwälte PartGmbB
Königstraße 2
90402 Nürnberg (DE)**

(54) **TEXT QUANTUM CIRCUIT DETERMINATION METHOD, TEXT CLASSIFICATION METHOD,
AND RELATED APPARATUS**

(57) The present disclosure provides a quantum circuit determining method for a text, a text classifying method and related devices. The quantum circuit determining method for a text comprises obtaining parts of speech of all words in a text corpus; obtaining relevancies between all words according to semanteme of the text corpus; and determining qubits and parameter-containing quantum logic gates of quantum circuits according to the parts of speech and the relevancies. Therefore, quantum network technology is closely integrated with text classification, so that quantum circuits can be used to classify text accurately and quickly.

FIG.3

## Description

## CROSS-REFERENCE TO RELATED APPLICATIONS

The present disclosure claims priority to a Chinese patent application No. CN 202111194504.8 filed on October 13, 2021 and entitled "text classifying method, device, storage medium and electronic device"; and to a Chinese patent application No. CN 202111193343.0 filed on October 13, 2021 and entitled "quantum circuit determining method for a text, device, storage medium and electronic device", which are hereby incorporated by reference in their entireties.

## TECHNICAL FIELD

The present disclosure relates to the field of natural language processing (NLP), and particularly to a quantum circuit determining method for a text, a text classifying method and related devices.

## BACKGROUND

With the development of network, there has been a growing amount of data text in the network. In the era of rapid development of big data, Natural Language Processing (NLP), which processes data text from a network, is getting much attention. Text classification is a very important branch of NLP.

Quantum network, as a cutting-edge technology nowadays, has been emerging in various fields. Accordingly, how to combine text classification with quantum network has recently become an urgent problem to solve.

## SUMMARY

One objective of the present disclosure is to provide a quantum circuit determining method for a text, a text classifying method and related devices, so as to ameliorate, at least in part, the above problems.

One embodiment of the present disclosure provides a quantum circuit determining method for a text, which comprises:

obtaining part of speech of all words in a text corpus;
obtaining relevancies between all words according to semanteme of the text corpus;
determining qubits and parameter-containing quantum logic gates of quantum circuits according to the parts of speech and the relevancies.

In a second aspect, an embodiment of the present disclosure provides a text classifying method based on quantum circuits, which comprises:

constructing quantum circuits for a text to be classified according to the above method;

determining initialized parameter values of parameter-containing quantum logic gates in the quantum circuits according to meanings of all words in a text corpus, running the quantum circuits and obtaining a running result thereof;
obtaining a predictive classification result of the text corpus according to the running result.

In a third aspect, an embodiment of the present disclosure provides a text classifying method, which comprises:

converting a text corpus into a target quantum circuit according to parts of speech, meanings and relevancies of all words in the text corpus;
wherein the relevancies comprise relevancies between each word and other words in the text corpus;
obtaining the running result of the target quantum circuit, wherein the running result comprises an output result of a qubit when the target quantum circuit is run each time; and
obtaining a predictive classification result of the text corpus according to the running result.

In a fourth aspect, an embodiment of the present disclosure provides a quantum circuit determining device for a text, characterized by comprising:

a first obtaining device configured for obtaining parts of speech of all words in a text corpus;
a second obtaining device configured for obtaining relevancies between all words according to semanteme of the text corpus;
a determining device configured for determining qubits and parameter-containing quantum logic gates of quantum circuits according to the parts of speech and the relevancies.

In a fifth aspect, an embodiment of the present disclosure provides a text classifying device based on quantum circuits, comprising:

a quantum circuit determining device configured for constructing quantum circuits for a text to be classified according to the above method;
a predicting unit configured for determining initialized parameter values of parameter-containing quantum logic gates in the quantum circuits according to meanings of all words in a text corpus, running the quantum circuits and obtaining a running result thereof, and configured for obtaining a predictive classification result of the text corpus according to the running result.

In a sixth aspect, an embodiment of the present disclosure provides a text classifying device, which comprises:

a processing unit configured for converting a text corpus into a target quantum circuit according to parts of speech, meanings and relevancies of all words in the text corpus;

wherein the relevancies comprise relevancies between each word and other words in the text corpus; the processing unit is further configured for obtaining the running result of the target quantum circuit, wherein the running result comprises an output result of a qubit when the target quantum circuit is run each time; and

a predicting unit configured for obtaining a predictive classification result of the text corpus according to the running result.

In a seventh aspect, an embodiment of the present disclosure provides a storage medium having a computer program stored therein, wherein the computer program is configured for implementing, when executed by a processor, the above method.

In an eighth aspect, an embodiment of the present disclosure provides an electronic device, which comprises a processor and a memory, the memory is used for storing one or more programs which implement, when executed by the processor, the above method.

Comparing with that prior art, embodiments of the present disclosure provide a quantum circuit determining method for a text and a text classifying method. The quantum circuit determining method for a text comprises obtaining parts of speech of all words in a text corpus; obtaining relevancies between all words according to semanteme of the text corpus; and determining qubits and parameter-containing quantum logic gates of quantum circuits according to the parts of speech and the relevancies. Therefore, quantum network technology is closely integrated with text classification, so that quantum circuits can be used to classify text accurately and quickly.

In order to explain and elucidate the above purposes, features and advantages of the present disclosure, the following preferred embodiments, together with the accompanying drawings, are described in detail as follows.

## BRIEF DESCRIPTION OF THE DRAWINGS

In order to clearly illustrate technical solutions of embodiments of the present application, accompanying drawings that need to be used in the embodiments will be briefly introduced as follows. It is to be understood that the following drawings are only some embodiments of the present application, and thus should not be taken as limiting the scope. For those skilled in the art, other drawings can also be obtained according to the disclosed drawings without creative efforts.

FIG. 1 is a flowchart of a text classifying method according to an embodiment of the present application;

FIG. 2 is a schematic structural illustration of an electronic device provided in an embodiment of the present application;

FIG. 3 is a flowchart of a quantum circuit determining method for a text provided in an embodiment of the present application;

FIG. 4 is a flowchart of another quantum circuit determining method for a text provided in an embodiment of the present application;

FIG. 5a is a schematic diagram of a syntax type of n + tv + n provided in an embodiment of the present application;

FIG. 5b is a schematic diagram of a syntax type of adj + n + tv + n provided in an embodiment of the present application;

FIG. 5c is a schematic diagram of a syntax type of n + tv + adj + n provided in an embodiment of the present application;

FIG. 6a is a schematic diagram of a simplified syntax type of n + tv + n provided in an embodiment of the present application;

FIG. 6b is a schematic diagram of a simplified syntax type of adj + n + tv + n provided in an embodiment of the present application;

FIG. 6c is a schematic diagram of a simplified syntax type of n + tv + adj + n provided in an embodiment of the present application;

FIG. 7a is a schematic diagram of parameter-containing quantum circuits corresponding to a syntax type of n + tv + n provided in an embodiment of the present application;

FIG. 7b is a schematic diagram of parameter-containing quantum circuits corresponding to a syntax type of adj + n + tv + n provided in an embodiment of the present application;

FIG. 7c is a schematic diagram of parameter-containing quantum circuits corresponding to a syntax type of n + tv + adj + n provided in an embodiment of the present application;

FIG. 8 is one of flowchart s of a text classifying method based on quantum circuits provided in an embodiment of the present application;

FIG. 9 is one of flowcharts of another text classifying method based on quantum circuits provided in an embodiment of the present application;

FIG. 10 is a schematic diagram of a sub-step S 107 provided in FIG. 9 of an embodiment of the present application;

FIG. 11 is one of flowcharts of a text classifying method provided in another embodiment of the present application;

FIG. 12 is a schematic diagram of units of a quantum circuit determining device for a text element provided in an embodiment of the present application;

FIG. 13 is a schematic diagram of units of a text classifying device based on a quantum circuit provided in an embodiment of the present application;

FIG. 14 is a schematic diagram of units of a text classifying device provided in another embodiment of the present application.

## DETAILED DESCRIPTION

In order to clarify the purpose, technical solutions and advantages of the embodiments of the present disclosure, technical solutions in the embodiments of the present disclosure are described below with reference to the accompanying drawings in the embodiments of the present disclosure. Obviously, the described embodiments are merely part of rather than all of the embodiments of the present disclosure. The components of the embodiments of the present application, which are usually described and shown in the drawings herein, may be arranged and designed in a variety of different configurations

Therefore, the following detailed description of the embodiments of the present application provided in the drawings is not intended to limit the scope of the claimed application, rather, it merely indicates the selected embodiments of the present application. Based on the embodiments in the present application, all other embodiments obtained by a person skilled in the art without creative work fall within the scope of protection of the present application.

It should be noted that similar reference numerals and letters represent similar items in the accompanying drawings below. Therefore, once an item is defined in one drawing, it is unnecessary to further discuss the item in the subsequent drawings. At the same time, in the description of the present application, terms "first" and "second" are only used for descriptive purposes, and should not be understood as indicating or implying relative importance

It should be noted that in the present application, relational terms such as first and second and the like are used solely to distinguish one entity or operation from another entity or operation without necessarily requiring or implying any such actual relationship or order between such entities or operations. Besides, the terms "comprise", "include" or any other variation thereof, are intended to cover a non-exclusive inclusion, such that a process, method, article, or apparatus that comprises a list of elements does not comprise only those elements but may comprise other elements not expressly listed or inherent to such process, method, article, or apparatus. Without further restriction, the elements defined by the phrase "including a ...... " do not preclude the existence of other identical elements in the process, method, article or apparatus that comprises the elements.

In the description of the present application, it should be understood that, an orientation or positional relationship indicated by terms "top", "bottom", "inner", "outer", is based on the orientation or positional relationship shown in the accompanying drawings and an usual orientation or positional relationship of the application product when it is used, and is only for convenience of describing the present application and simplifying the description, rather than indicating or implying that a device or element referred to must be provided with a particular orientation, be constructed and operate in a particular orientation, and therefore should not be understood as a limitation to the present application.

In the description of the present application, it should be noted that unless expressly specified and limited otherwise, terms "provided", "connected" should be interpreted in a broad sense, for example, it can be a fixed connection, a detachable connection, or an integrated; it can be a mechanical connection or an electrical connection; it can be directly connected, or indirectly connected through an intermediate medium, and it can be an internal communication between two elements or an interaction relationship between the two elements. For those of ordinary skill in the art, specific meanings of the above terms in the present application can be understood according to specific situations.

Some embodiments of the present application are described in detail below with reference to the accompanying drawings. The embodiments and features in the embodiments described below may be combined with each other without conflict.

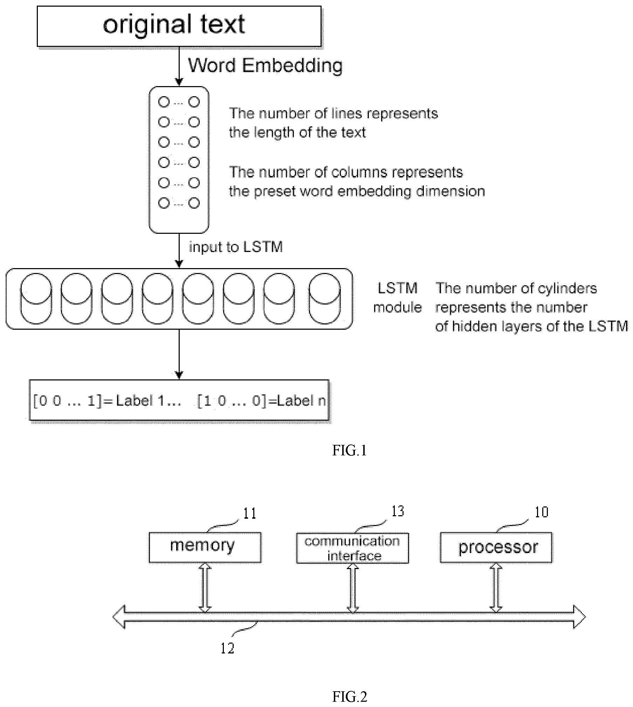

In the prior art as shown in FIG. 1, the original text sequence information is converted into a matrix by Word Embedding, and the matrix obtained by the conversion is used as the input of the neural network in the next step. Wherein, the Word Embedding is usually done with the static word vector Word2Vec method. Alternatively, the matrix obtained by Word Embedding is input to a Long-Short-Term Memory (LSTM) network to learn the semantic features of the sentence, and the deep semantic features of the sentence are extracted by strategies such as forgetting and remembering. Finally, the emotional label (positive, neutral, negative) is output through a layer of full connection.

Through extensive practice and summarization by the inventor, it is found that the current Chinese classification task through natural language processing (NLP) focuses on constructing computational power for the semanteme; the semanteme information of unstructured text used by the current Chinese classification task through NLP is not sufficient, such as the syntactic components of words in the text. The current Chinese classification task through NLP relies on the semanteme vectors of all words.

In order to overcome the above problems, an embodiment of the present application provides a quantum-friendly Chinese text classifying method, which is specifically a quantum circuit determining method for a text, a text classifying method and related devices. It is possible to explore the application of quantum computing in linguistics and facilitate the in-depth study of the deep meaning of language. For the era of Noisy Intermediate-Scale Quantum (NISQ), this application is different from the current deep learning and other AI technologies in which the grammatical structure and meaning are learned by a lot of learning. The text classifying method provided by the embodiments of the present application directly encodes the text language completely, so that the encoding of semanteme and grammar with greater depth and breadth is obtained by using the interaction between words to entangle.

Specifically, the embodiment of the present application provides an electronic device, which may be a computer device or a server device. Please refer to FIG. 2, a schematic structural illustration of an electronic device is shown. The electronic device comprises a processor 10, a memory 11, and a bus 12. The processor 10 and the memory 11 are connected by the bus 12, and the processor 10 is configured for executing executable modules, such as computer programs, stored in the memory 11.

The processor 10 may be an integrated circuit chip having signal processing capabilities. In implementation, steps of the text classifying method may be performed by hardware integrated logic circuits in the processor 10 or instructions in the form of software. The above processor 10 may be a general-purpose processor, including a Central Processing Unit (CPU), a Network Processor (NP), and the like; and may also be a Digital Signal Processor (DSP), an Application Specific Integrated Circuit (ASIC), a Field-Programmable Gate Array (FPGA) or other programmable logic devices, discrete gates or transistor logic devices, discrete hardware components.

The memory 11 may comprise a high-speed Random Access Memory (RAM), and may also comprise a non-volatile memory, such as at least one disk memory.

The bus 12 may be an Industry Standard Architecture (ISA) bus, a Peripheral Component Interconnect (PCI) bus or an Extended Industry Standard Architecture (EISA) bus, etc. FIG. 2 is shown with only one double sided arrow, which does not mean that there is only one bus 12 or one type of bus 12.

The memory 11 is configured for storing programs, for example, a program corresponding to the quantum circuit determining device for a text and a program corresponding to the text classifying device. Each of the quantum circuit determining device for a text and the text classifying device comprises at least one software function module which may be stored in the memory 11 or solidified in the operating system (OS) of the electronic device in the form of software or firmware. After receiving the execution instruction, the processor 10 executes the program to implement the text classifying method.

Possibly, the electronic device provided by the embodiment of the present application further comprises a communication interface 13. The communication interface 13 is connected to the processor 10 via the bus. The electronic device may receive text information transmitted by other terminals through the communication interface 13.

It should be understood that the structure shown in FIG. 2 is only a schematic structural illustration of a portion of the electronic device, and the electronic device may further comprise more or fewer components than those shown in FIG. 2, or have a different configuration than that shown in FIG. 2. The components shown in FIG. 2 may be implemented in hardware, software, or a combination thereof.

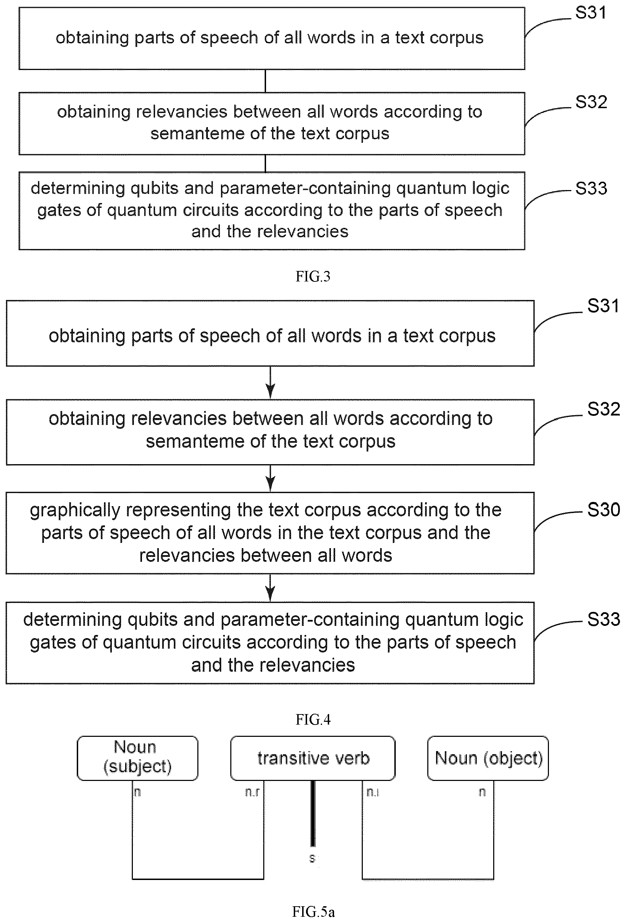

The embodiment of the present application provides a quantum circuit determining method for a text, as shown in FIG. 3.

S31, obtaining parts of speech of all words in a text corpus;

S32, obtaining relevancies between all words according to semanteme of the text corpus; wherein, the relevancies comprise relationships between each word and the other words in the text corpus;

S33, determining qubits and parameter-containing quantum logic gates of quantum circuits according to the parts of speech and the relevancies.

By determining the qubits and the parameter-containing quantum logic gates of the quantum circuits according to the parts of speech of all words in a text corpus and the relevancies between all words, the present embodiment realizes quantum coding of text corpus, obtains the encoding of semanteme and grammar with greater depth and breadth by using the interaction between words to entangle, and converts the encoding of semanteme and grammar with greater depth and breadth into the quantum circuits.

It is understood that a text corpus with a certain semanteme usually comprises a feature that represents the structure of the text corpus itself, as well as a feature serving as a modifier in the text corpus. The feature representing the structure of the text corpus itself is a dominant feature, while a semanteme change caused by the features serving as the modifier is a recessive feature.

Exemplarily, "cows eat grass" is a feature of the structure itself, while in "young cows eat tender grass", "young" and "tender" are the features serving as the modifier in the text corpus.

Optionally, said "obtaining relevancies between all words according to semanteme of the text corpus" in step S32 comprises:

S321, obtaining a first relevance characterizing a dominant feature of the text corpus according to the semanteme of the text corpus;

Exemplarily, the first relevance characterizing a dominant feature of the text corpus obtained according to the semanteme of the text corpus comprises a relevance between "young" and "cows", a relevance between "cows" and "eat", a relevance between "eat" and "grass", and a relevance between "tender" and "grass".

S322, obtaining a second relevance characterizing a recessive feature of the text corpus according to the semanteme of the text corpus;

Exemplarily, the second relevance characterizing a recessive feature of the text corpus obtained according to the semanteme of the text corpus comprises a relevance between "young" and "eat", and a relevance between "eat" and "tender".

Optionally, said "determining qubits and parameter-containing quantum logic gates of quantum circuits according to the parts of speech and the relevancies" in step S33 comprises:

S331, determining partial-qubits and the parameter-containing quantum logic gates that represent words with each part of speech;

Exemplarily, determining that a noun word is characterized as one qubit as well as an Rx($\theta$) gate, an Rz($\theta$) gate and an Rx($\theta$) gate acting sequentially on the qubit; or

determining that an adjective word is characterized as two qubits and one IQP layer acting on the two qubits; or

determining that a transitive verb word is characterized as three sequentially adjacent qubits and an IQP layer acting on two groups of two adjacent qubits,

wherein: the IQP layer comprises a Hadamard gate acting on each qubit separately, and a CRz($\theta$) gate acting on the two qubits simultaneously.

S332, processing the partial-qubits according to the first relevance to obtain entire qubits characterizing a structure of the text corpus, as the qubits of the quantum circuits;

Exemplarily, partially combining the partial-qubits characterizing a word with the first relevance so as to obtain entire qubits characterizing a structure of the text corpus, as the qubits of the quantum circuits.

S333, determining quantum logic gates characterizing the recessive feature of the text corpus according to the second relevance.

Exemplarily, determining the quantum logic gates characterizing the recessive feature of the text corpus as a H gate and a CNOT gate according to the second relevance, and the encoding of the recessive feature is realized through an entanglement gate (CNOT gate).

Exemplarily, before "determining qubits and parameter-containing quantum logic gates of quantum circuits according to the parts of speech and the relevancies" in step S33, as shown in FIG. 4, the method further comprises:

S30, graphically representing the text corpus according to the parts of speech of all words in the text corpus and the relevancies between all words.

Compared to the way of converting the text corpus to vectors and then encoding the quantum circuits of the text corpus through the vectors, by graphically representing the text corpus and then mapping the quantum circuits directly based on text corpus graphically represented, encoding the quantum circuits by the text corpus graphically represented is convenient, friendly and easy to implement.

Optionally, said "graphically representing the text corpus according to the parts of speech of all words in the text corpus and the relevancies between all words" in step S30 comprises:

S301, determining a structural initial graph of the text corpus according to the parts of speech of all words in the text corpus and the relevancies between all words, wherein all words with different parts of speech in the structural initial graph are placed horizontally, and the relevancies between all words are represented by a U-shaped broken line; as shown in FIGS. 5a-5c.

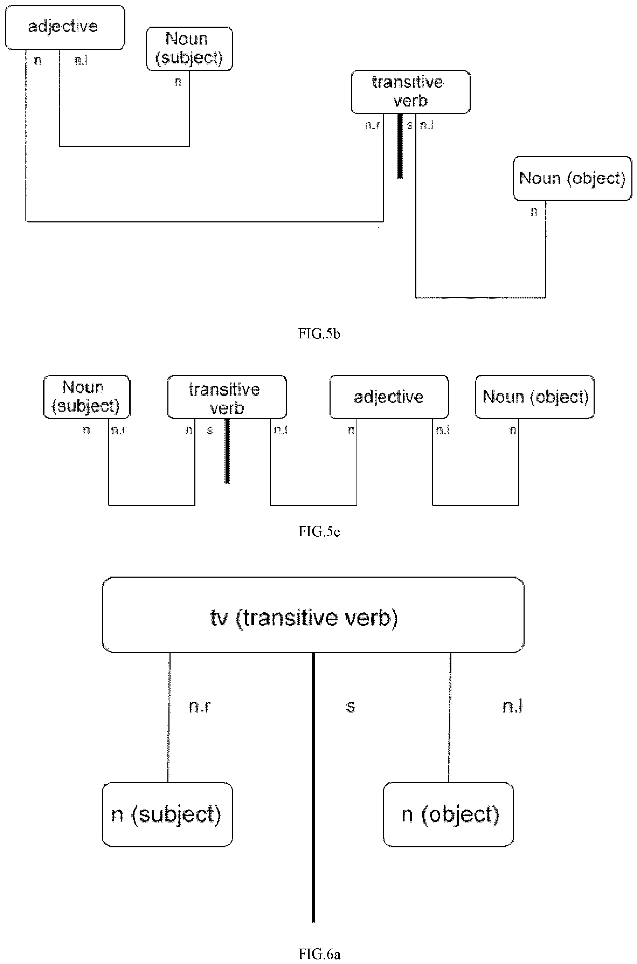

S302, simplifying the structural initial graph to obtain a structural sketch, wherein all words with different parts of speech in the structural sketch are placed in a staggered manner, and the relevancies between all words are represented by a U-shaped broken line, as shown in FIGS. 6a-6c.

Then, the text corpus graphically represented may be directly mapped to the quantum circuits.

When mapping, words with each part of speech are mapped to corresponding partial-qubits as well as parameter-containing quantum logic gates, then the partial-qubits with different parts of speech are combined according to the first relevance, and then the second relevance is mapped to a corresponding quantum logic gate.

Specifically, a noun word is mapped as one qubit as well as an Rx($\theta$) gate, an Rz($\theta$) gate and an Rx($\theta$) gate acting sequentially on the qubit; an adjective word is mapped as two qubits and one IQP layer acting on the two qubits, wherein: the IQP layer comprises a Hadamard gate acting on each qubit separately, and a CRz($\theta$) gate acting on the two qubits simultaneously; a transitive verb word is mapped as three sequentially adjacent qubits and a IQP layer acting on two groups of two adjacent qubits, wherein: the IQP layer comprises a Hadamard gate acting on each qubit separately, and a CRz($\theta$) gate acting on the two qubits simultaneously.

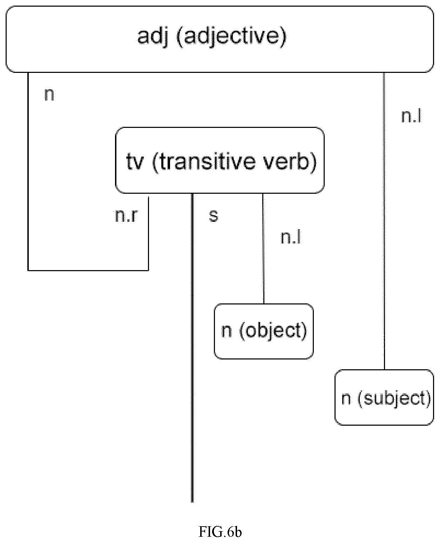

Taking FIGS. 6b-7b as examples, the adjective word is mapped as two qubits q3 and q4, as well as one IQP layer acting on the two qubits, and the IQP layer comprises the Hadamard gate acting on each of qubits q3 and q4 separately, and the CRz($\theta$) gate acting on the two qubits q3 and q4 simultaneously; the transitive verb word is mapped as three sequentially adjacent qubits q0, q1 and q2, a IQP layer acting on two adjacent qubits q0 and q1, and a IQP layer acting on two adjacent qubits q1 and q2; the IQP layer comprises the Hadamard gate acting on each qubit separately, and the CRz($\theta$) gate acting on two qubits simultaneously. Since there is a first association between the subject noun and the adjective, a qubit Q4 for mapping the subject noun is combined with a qubit q4 for mapping the adjective; since there is a first association between the object noun and the transitive verb, a qubit Q2 for mapping the object noun is combined with a qubit q2 for mapping the transitive verb; since there is a second association between the adjective and the transitive verb, the second association is mapped to acting on a qubit Q3 characterizing the adjective and a qubit q0 characterizing the adjective, and specifically, mapped to acting on the H gate of q3 as well as the CNOT gate of q3 and q0; and in the text corpus shown in FIG. 6b, the adjective precedes the transitive verb, wherein q3 is the control bit of the CNOT gate, and q0 is the controlled bit of the CNOT gate.

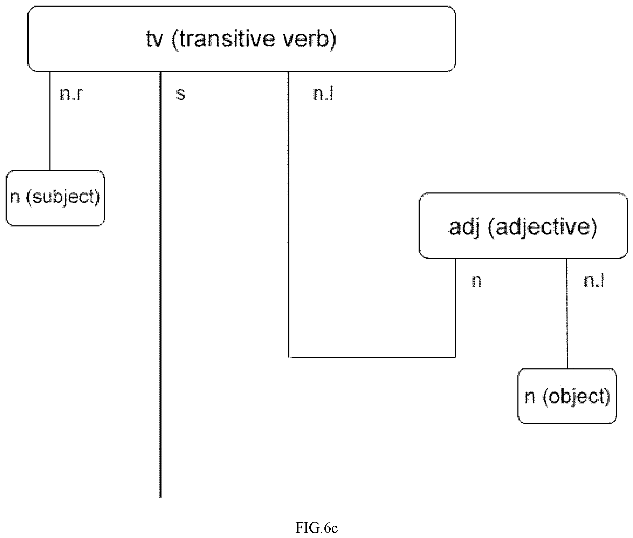

The process of FIGS. 6a-7a and 6c-7c is similar to that of FIGS. 6b-7b, which will not be described in detail herein.

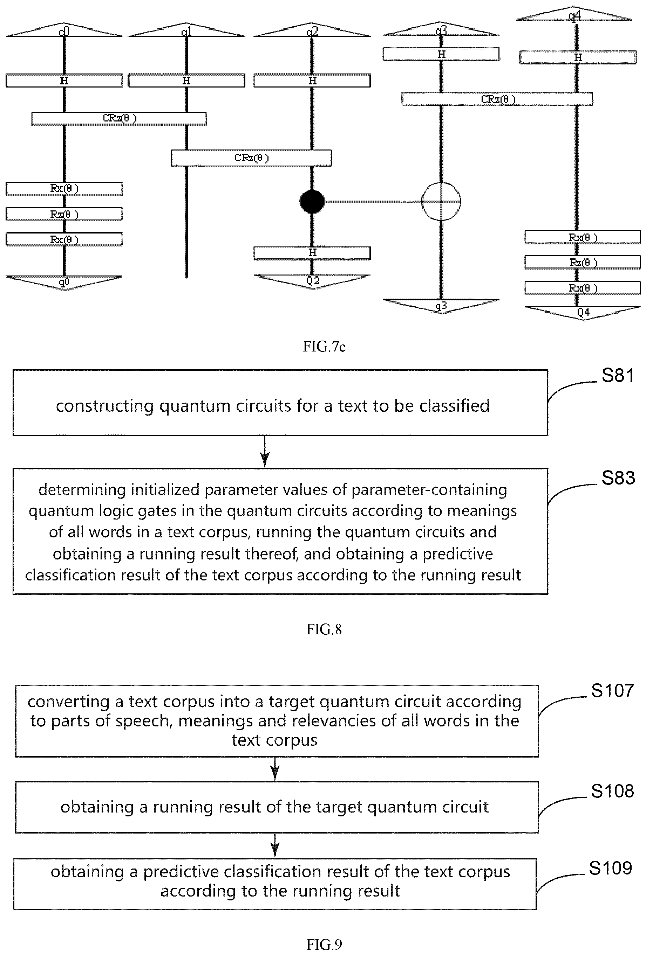

Another embodiment of the present application provides a text classifying method based on quantum circuits, which may be, but is not limited to, acting on the electronic device shown in FIG. 2, and the specific process is shown in FIG. 8. The text classifying method comprises S81 and S82.

S81, constructing quantum circuits for a text to be classified according to the above quantum circuit determining method for a text;

S83, determining initialized parameter values of parameter-containing quantum logic gates in the quantum circuits according to meanings of all words in a text corpus, running the quantum circuits and obtaining a running result thereof, and obtaining a predictive classification result of the text corpus according to the running result. Wherein the running result comprises an output result of a qubit when the target quantum circuit is run each time.

The quantum circuit in the present embodiment is not only related to parts of speech and meaning of words, but also closely related to relevancies. By directly encoding the text language to use the interaction between words to entangle so as to obtain the encoding of semanteme and grammar with greater depth and breadth, the encoding of semanteme and grammar with greater depth and breadth are converted to quantum circuits.

It is to be understood that the quantum circuit comprises a plurality of qubits, a logic gate arranged on each qubit and a logic gate arranged between the qubits.

It is to be understood that the number of times of running the quantum circuit is set on the quantum computer, and at the beginning of each time of running the quantum circuit, the input of the quantum circuit is set to a predetermined initial state. At the end of the run, all qubits of the quantum circuit are measured to obtain the running result.

To sum up, the embodiment of the present application provide a text classifying method based on quantum circuits, which constructs quantum circuits for a text to be classified according to the above quantum circuit determining method for a text; determines initialized parameter values of parameter-containing quantum logic gates in the quantum circuits according to meanings of all words in a text corpus, runs the quantum circuits and obtains a running result thereof, and obtains a predictive classification result of the text corpus according to the running result. Wherein, the running result comprises an output result of a qubit when the quantum circuit is run each time. Therefore, quantum network technology is closely combined with text classification, so that the text may be classified accurately and quickly by using quantum circuits.

In an embodiment, for the content in S81, an embodiment of the present application further provides a possible implementation, and said "constructs quantum circuits for a text to be classified" in S81 is performed by the above quantum circuit determining method for a text.

In an embodiment, on the basis of FIG. 8, for the content in S81, an embodiment of the present application further provides a possible implementation, said "constructs quantum circuits for a text to be classified" in S81 comprises S81-1, S81-2, S81-3 and S81-4.

S81-1, determining a sentence syntax type corresponding to the text corpus according to the parts of speech and the relevancies of all words in the text corpus.

Please refer to FIG. 5a, FIG. 5b and FIG. 5c, FIG. 5a, FIG. 5b and FIG. 5c represent different sentence syntax types separately. Wherein, FIG. 5a represents a syntax type of n + tv + n; FIG. 5b represents a syntax type of adj + n + tv + n; and FIG. 5c represents a syntax type of n + tv + adj + n. Wherein, n is a name, tv is a transitive verb, and adj is the adjective.

S81-2, determining a target parameter-containing quantum circuit according to the sentence syntax type.

Wherein, the target parameter-containing quantum circuit is a parameter-containing quantum circuit corresponding to the sentence syntax type.

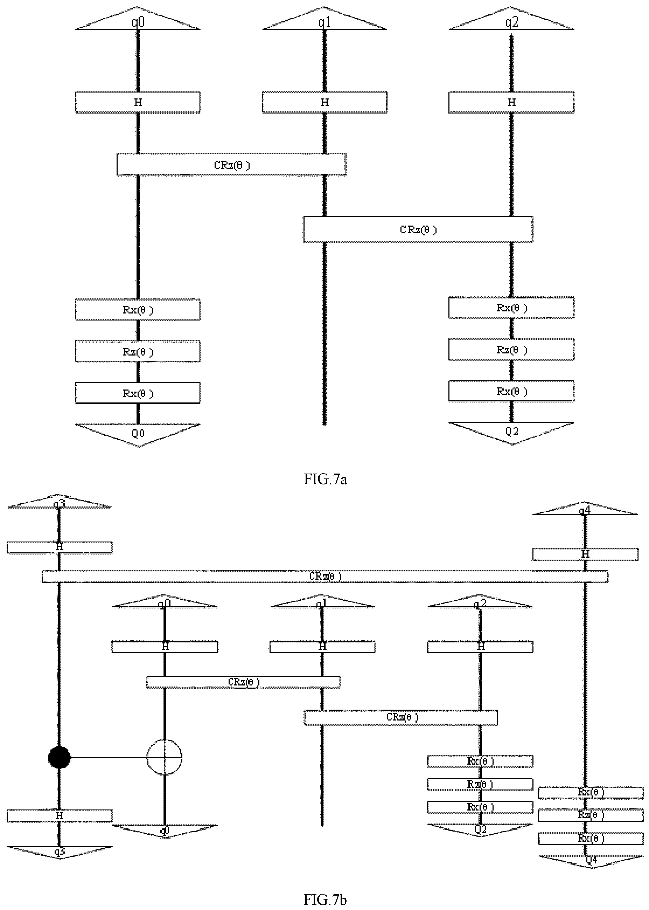

It should be noted that different sentence syntax types correspond to different parameter-containing quantum circuits. Please refer to FIG. 7a, FIG. 7b and FIG. 7c, FIG. 7a, FIG. 7b and FIG. 7c represent different parameter-containing quantum circuits separately. FIG. 7a represents a parameter-containing quantum circuit corresponding to the syntax type of n + tv + n, FIG. 7b represents a parameter-containing quantum circuit corresponding to the syntax type of adj + n + tv + n, and FIG. 7c represents a parameter-containing quantum circuit corresponding to the syntax type of n + tv + adj + n. The parameter-containing quantum circuit in the embodiments of the present application may also be understood as a quantum circuit with parameters.

It can be understood that the number of quantum circuits and the arrangement of logic gates are different in different parameter-containing quantum circuits.

S81-3, determining an initial parameter of a logic gate in the target quantum framework according to the meanings of all words in the text corpus, so as to complete the conversion of the quantum circuit.

It can be understood that words with the same parts of speech may have different meanings. For example, the meanings of school and home, which are both nouns, are different, and the meanings of eating and dropping, which are both verbs, are different. Take two sentences as examples to illustrate, Xiao ming eats a watermelon and Xiao ming drops a watermelon, the sentence syntax types of these two sentences are the same and correspond to the same parameter-containing quantum circuit. However, the meanings of eating and dropping are different, and the initial parameters of the logic gates in the parameter-containing quantum circuit are not the same.

In a possible implementation, limited by the computing power of the current quantum computer, the sentence type needs to be simplified. Please refer to FIG. 6a, FIG. 6b, and FIG. 6c, FIG. 6a, FIG. 6b, and FIG. 6c respectively show different simplified sentence syntax type. Wherein, FIG. 6a shows a simplified syntax type of n+tv+n, FIG. 6b shows a simplified syntax type of adj+n+tv+n, and FIG. 6c shows a simplified syntax type of n+tv+ adj+n. The parameter-containing quantum circuits correspond to the simplified syntax types respectively, which avoids exceeding the capabilities of the quantum computer.

Continuing to referring to FIG. 7a, FIG. 7b, and FIG. 7c, the parameter-containing quantum circuit comprises at least one IQP layer acting on the two qubits, wherein: the IQP layer comprises a Hadamard gate acting on each qubit separately, and a CRz(θ) gate acting on the two qubits simultaneously.

It can be preset that the noun n = Word ('woman', n) is represented by one qubit; adjective adj = Word ('glad', n @ n.l) is represented by two qubits; transitive verb tv = Word (hospitality, n.r @ s @ n.l) is represented by three qubits. Continuing to referring to FIG. 7a, FIG. 7b, and FIG. 7c, the three qubits corresponding to the transitive verb act through two IPQ layers, and the two qubits corresponding to the adjective act through one IPQ layer.

In an implementation, regarding the initialized parameter for the logic gate in the parameter-containing quantum circuit, it may be an exemplary initialized parameter of adj [[0.1133103]], an exemplary initialized parameter of n [0.26733895, 0.6874017, 0.93166275], and an exemplary initialized parameter of tv [[0.07656308, 0.6977936]].

It should be noted that the circuit depth of the quantum circuit in FIG. 7a, FIG. 7b, and FIG. 7c is depth = 1, that is, the number of IQP layers is 1. The circuit depth may be changed in one possible implementation, which is not repeated herein.

It can be understood that the determination process of the parameter-containing quantum circuit corresponding to the sentence syntax type is carried out by using the quantum circuit determining method for a text as above. On the basis of FIG. 8, optionally, before "determining initialized parameter values of parameter-containing quantum logic gates according to meanings of all words in a text corpus" in step S82, the method further comprises:
training the quantum circuits to obtain parameter values corresponding to meanings of all words and for determining the initialized parameter values.

It can be understood that S82 specifically comprises:

S821, determining initialized parameter values of parameter-containing quantum logic gates to be trained according to the meanings of all words in the text corpus, running the parameter-containing quantum logic gates to be trained and obtaining a running result thereof;
S822, obtaining a predictive classification result of the text corpus according to the running result;
S823, correcting the initialized parameter values according to the predictive classification result to obtain updated parameter values, and then re-executing steps of "running the quantum circuits and obtaining a running result thereof' and "obtaining the predictive classification result of the text corpus according to the running result" until the predictive classification result is close to a true result;
S824, obtaining the updated parameter value when the predictive classification result is close to the true result, for determining parameter values of the initialized parameter values.

Optionally, said "obtaining a predictive classification result of the text corpus according to the running result" in step S822 comprises:

obtaining a cost function corresponding to a real label according to the running result, and obtaining the predictive classification result of the text corpus according to the cost function, wherein the cost function is defined as follows:

$$C(\Theta) := \sum L(P)^T \bullet \log(L_\Theta(P))_,$$

wherein, LO(P) characterizes the running result, L(P) characterizes the real label, and C (Θ) characterizes the cost function.

It should be noted that in quantum computing, the general state of a qubit is a superimposed linear combination: $|\varphi\rangle = \alpha|0\rangle + \beta|1\rangle$, $|0\rangle, |1\rangle$ represent orthogonal basis vectors, and is related to the 0 and 1 in the measured running result, wherein $P(0)=|\alpha|^2$, $P(1)=|\beta|^2$.

The probability is given by Bourne's law, $P(i)=|\langle i|\varphi\rangle|^2$, i=0, 1, wherein $P(0)=|\alpha|^2$, $P(1)=|\beta|^2$.

After the above steps, each sentence of the Chinese text has been encode into a quantum circuit, a correspondingly output quantum state is represented by $|P(\Theta)\rangle|$, the running result is defined as

$$L_\Theta^i(P) := \left| \; |\langle i \; | \; P(\Theta)\rangle|^2 - \varepsilon \; \right|, \text{ i=0 or 1; and}$$

$I_\ominus^0(P)$ represents the running result represented by a quantum state 10>state, which may also be understood that the measurement is the measurement value corresponding to the collapse of the quantum state to the 0 state, which value serves as the running result;

$I_\ominus^1(P))$ represents the running result represented by a quantum state |1>state, and similarly, it may also be understood that the measurement is the measurement value corresponding to the collapse of the quantum state to the 1 state, which value serves as the running result. In this way, it can be derived that:

$$L_\Theta(P) := \frac{(I_\ominus^0(P), I_\ominus^1(P))}{\sum_i I_\ominus^i(P)} .$$

Optionally, said "correcting the initialized parameter values according to the predictive classification result to obtain updated parameter values" in step S823 comprises:

correcting the initialized parameter values according to the predictive classification result based on synchronous perturbation stochastic approximation algorithm to obtain the updated parameter value.

The text classifying method provided by the embodiment of the present application uses quantum to encode the syntax, and focuses on the semanteme information of the interaction between words, so that compared to the traditional semanteme encoding information, the present application may obtain deeper dimensional and more diverse semanteme information, and the semanteme vector that can be represented in billions of classical bits can be realized through a small number of qubits, thus showing advantages of the quantum.

The text classifying method provided by the embodiments of the present application may be applied to, but is not limited to, the electronic device shown in FIG. 2, and the specific process is shown in FIG. 9. The text classifying method comprises S107, S108, and S109.

S107, converting a text corpus into a target quantum circuit according to parts of speech, meanings and relevancies of all words in the text corpus.

Wherein the relevancies comprise relevancies between each word and other words in the text corpus.

The target quantum circuit is not only related to parts of speech and meaning of words, but also closely related to relevancies. By directly encoding the text language to use the interaction between words to entangle so as to obtain the encoding of semanteme and grammar with greater depth and breadth, the encoding of semanteme and grammar with greater depth and breadth are converted to quantum circuits.

It is to be understood that the target quantum circuit comprises a plurality of qubits, a logic gate arranged on each qubit and a logic gate arranged between the qubits.

S108, obtaining a running result of the target quantum circuit.

Wherein the running result comprises an output result of a qubit when the target quantum circuit is run each time.

It is to be understood that the number of times of running the target quantum circuit is set on the target quantum computer, and at the beginning of each time of running the target quantum circuit, the input of the target quantum circuit is set to a predetermined initial state. At the end of the run, all qubits of the quantum circuit are measured to obtain the running result.

S 109, obtaining a predictive classification result of the text corpus according to the running result.

To sum up, the embodiment of the present disclosure provides a text classifying method, which converts a text corpus into a target quantum circuit according to parts of speech, meanings and relevancies of all words in the text corpus; wherein the relevancies comprise relevancies between each word and other words in the text corpus; obtains the running result of the target quantum circuit, wherein the running result comprises an output result of a qubit when the target quantum circuit is run each time; and obtains a predictive classification result of the text corpus according to the running result. Therefore, quantum network technology is closely combined with text classification, so that the text may be classified accurately and quickly by using quantum circuits.

In a possible implementation, in order to encode the original text corpus into a quantum circuit, the Distributional Compositional Categorical Python (DisCoPy) tool is needed. DisCoPy may generate a sentence syntax type from the meaning of a text sentence, calculate a state vector, and then convert the state vector into a binary classification label. Different labels correspond to different sentence syntax types. DisCoPy has the advantage that tensor networks can be generated.

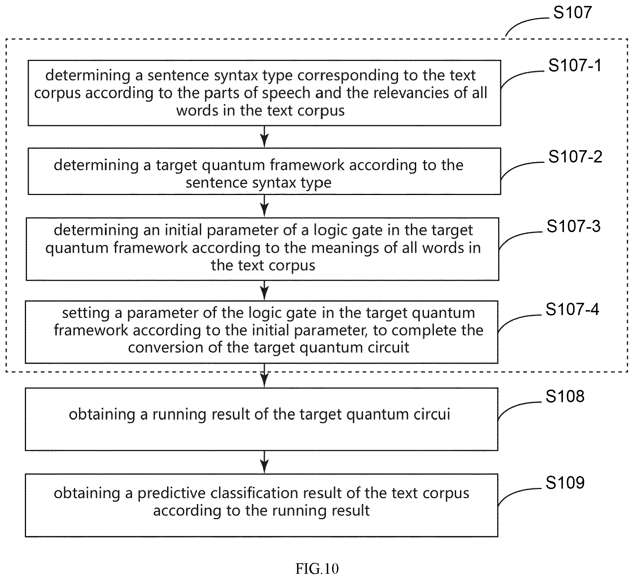

On the basis of FIG. 9, for the content in S107, an embodiment of the present application further provides a possible implementation. Please refer to FIG. 10, S107 comprises S107-1, S107-2, S107-3 and S107-4.

S107-1, determining a sentence syntax type corresponding to the text corpus according to the parts of speech and the relevancies of all words in the text corpus.

Please refer to FIG. 5a, FIG. 5b and FIG. 5c, FIG. 5a, FIG. 5b and FIG. 5c represent different sentence syntax types separately. Wherein, FIG. 5a represents a syntax type of n + tv + n, FIG. 5b represents a syntax type of adj + n + tv + n, and FIG. 5c represents a syntax type of n + tv + adj + n. Wherein, n is a name, tv is a transitive verb, and adj is the adjective.

S107-2, determining a target quantum framework according to the sentence syntax type.

Wherein the target quantum framework is a quantum framework corresponding to the sentence syntax type.

It should be noted that different sentence syntax types correspond to different quantum frameworks. Please refer to FIG. 7a, FIG. 7b and FIG. 7c, FIG. 7a, FIG. 7b and FIG. 7c represent different quantum frameworks separately. FIG. 7a represents a quantum framework corresponding to the syntax type of n + tv + n; FIG. 7b represents a quantum framework corresponding to the syntax type of adj + n + tv + n; and FIG. 7c represents a quantum framework corresponding to the syntax type of n + tv + adj + n. The quantum framework in the embodiments of the present application may also be understood as a quantum circuit with parameters.

It can be understood that the number of quantum circuits and the arrangement of logic gates are different in different quantum frameworks.

S107-3, determining an initial parameter of a logic gate in the target quantum framework according to the meanings of all words in the text corpus.

It can be understood that words with the same parts of speech may have different meanings. For example, the meanings of school and home, which are both nouns, are different, and the meanings of eating and dropping, which are both verbs, are different. Take two sentences as examples to illustrate, Xiao ming eats a watermelon and Xiao ming drops a watermelon, the sentence syntax types of these two sentences are the same and correspond to the same quantum framework. However, the meanings of eating and dropping are different, and the initial parameters of the logic gates in the quantum framework are not the same.

S107-4, setting a parameter of the logic gate in the target quantum framework according to the initial parameter, to complete the conversion of the target quantum circuit.

In a possible implementation, limited by the computing power of the current quantum computer, the sentence type needs to be simplified. Please refer to FIG. 6a, FIG. 6b, and FIG. 6c, FIG. 6a, FIG. 6b, and FIG. 6c respectively show different simplified sentence syntax type. Wherein, FIG. 6a shows a simplified syntax type of n+tv+n, FIG. 6b shows a simplified syntax type of adj+n+tv+n, and FIG. 6c shows a simplified syntax type of n+tv+ adj+n. The quantum frameworks correspond to the simplified syntax types respectively, which avoids exceeding the capabilities of the quantum computer.

Continuing to referring to FIG. 7a, FIG. 7b, and FIG. 7c, the quantum framework comprises the IQP layer acting on the two qubits, wherein: the IQP layer comprises a Hadamard gate acting on each qubit separately, and a CRz gate acting on the two qubits simultaneously.

It should be noted that the number of Hadamard gates is the same as the number of words, and the number of CRz gates is related to the number of adjectives and verbs in the sentence.

It can be preset that the noun n = Word ('woman', n) is represented by one qubit; adjective adj = Word ('glad', n @ n.l) is represented by two qubits; transitive verb tv = Word (hospitality, n.r @ s @ n.l) is represented by three qubits. Continuing to referring to FIG. 7a, FIG. 7b, and FIG. 7c, the three qubits corresponding to the transitive verb act through two IPQ layers, and the two qubits corresponding to the adjective act through one IPQ layer.

Regarding the initialized parameter for the logic gate in the parameter-containing quantum circuit, in an implementation, it may be an exemplary initialized parameter of adj [[0.1133103]], an exemplary initialized parameter of n [0.26733895, 0.6874017, 0.93166275], and an exemplary initialized parameter of tv [[0.07656308, 0.6977936]].

It should be noted that the circuit depth in FIG. 7a, FIG. 7b, and FIG. 7c is depth = 1, that is, the number of IQP layers is 1. The circuit depth may be changed in one possible implementation, which is not repeated herein.

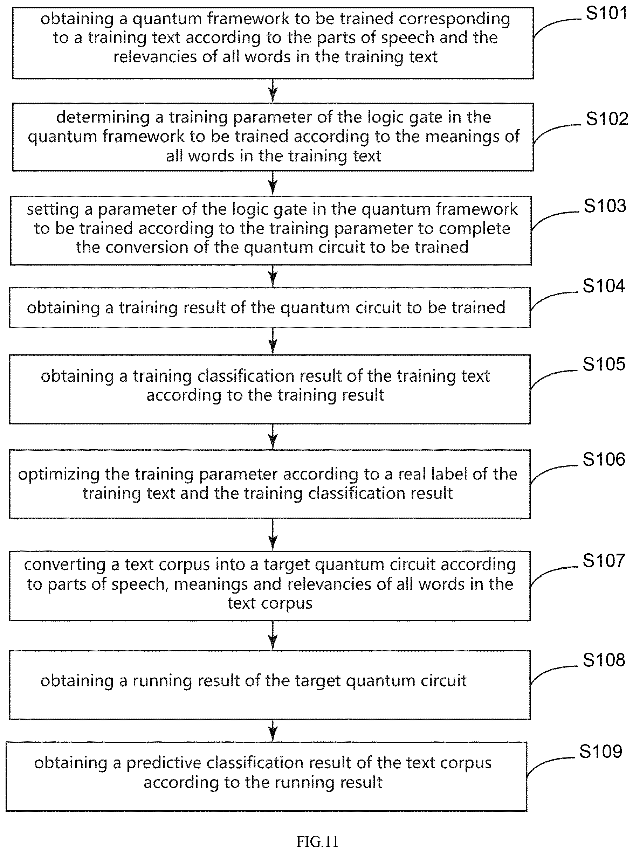

On the basis of FIG. 9, the embodiment of the present application also provides a possible implementation of how to train the quantum circuit. Referring to FIG. 11, before "converting a text corpus into a target quantum circuit according to parts of speech, meanings and relevancies of all words in the text corpus", the text classifying method further comprises: S101, S102, S103, S104, S105 and S106.

S101, obtaining a quantum framework to be trained corresponding to a training text according to the parts of speech and the relevancies of all words in the training text.

S102, determining a training parameter of the logic gate in the quantum framework to be trained according to the meanings of all words in the training text.

S103, setting a parameter of the logic gate in the quantum framework to be trained according to the training parameter to complete the conversion of the quantum circuit to be trained.

S104, obtaining a training result of the quantum circuit to be trained.

S105, obtaining a training classification result of the training text according to the training result.

S106, optimizing the training parameter according to a real label of the training text and the training classification result, wherein the optimized training parameter is used as the initial parameter of the logic gate in the target quantum framework when classifying the text.

Optionally, a cost function for optimizing the training parameter is expressed as:

$$C(\Theta) := \sum L(P)^T \bullet \log(L_\Theta(P))$$

,

wherein, LO(P) characterizes the predictive classification result, L (P) characterizes the real label, and C (Θ) characterizes the cost function.

Optionally, the quantum circuits are optimized using Simultaneous Perturbation Stochastic Approximation.

On the basis of FIG. 9, regarding an expression for "obtaining a predictive classification result of the text corpus according to the running result", the present application provides a possible implementation. Please refer to below

$$L_{\Theta}(P) := \frac{\left(I^0_{\Theta}(P), I^1_{\Theta}(P)\right)}{\sum_i I^i_{\Theta}(P)} \quad;$$

wherein, LO(P) characterizes the predictive classification result, $I^0_{\Theta}(P)$ characterizes the running result expressed by quantum state|0>state, and $I^1_{\Theta}(P))$ characterizes the running result expressed by quantum state|1>state.

It should be noted that in quantum computing, $|0\rangle,|1\rangle$ represent orthogonal basis vectors, and is related to the 0 and 1 in the measured running result, and the general state of a qubit is a superimposed linear combination: $|\varphi\rangle = \alpha|0\rangle + \beta|1\rangle$, wherein $P(0)=|\alpha|^2, P(1)=|\beta|^2$.

The probability is given by Bourne's law, $P(i)=|\langle i|\varphi\rangle|^2$, i=0, 1, wherein $P(0)=|\alpha|^2, P(1)=|\beta|^2$.

After the above steps, each sentence of the Chinese text has been encode into a quantum circuit, a correspondingly output quantum state is represented by $|P(\Theta)\rangle|$, the running result is defined as $I^i_{\Theta}(P) := \left| \left| \langle i | P(\Theta) \rangle \right|^2 - \varepsilon \right|$, i=0, 1; and $I^0_{\Theta}(P)$ represents the running result represented by a quantum state 10>state, which may also be understood that the measurement is the measurement value corresponding to the collapse of the quantum state to the 0 state, which value serves as the running result; $I^1_{\Theta}(P))$ represents the running result represented by a quantum state |1>state, and similarly, it may also be understood that the measurement is the measurement value corresponding to the collapse of the quantum state to the 1 state, which value serves as the running result. In this way, it can be derived that:

$$L_{\Theta}(P) := \frac{\left(I^0_{\Theta}(P), I^1_{\Theta}(P)\right)}{\sum_i I^i_{\Theta}(P)} \quad.$$

The text classifying method provided by the embodiment of the present application uses quantum to encode the syntax, and focuses on the semanteme information of the interaction between words, so that compared to the traditional semanteme encoding information, the present application may obtain deeper dimensional and more diverse semanteme information, and the semanteme vector that can be represented in billions of classical bits can be realized through a small number of qubits, thus showing advantages of the quantum.

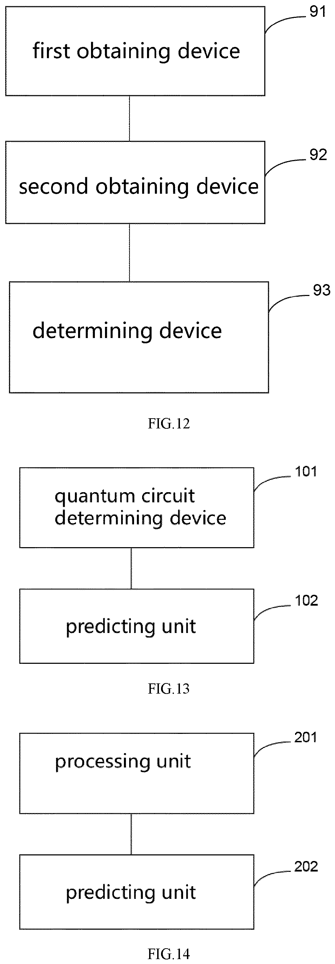

Please refer to FIG. 12, it is a quantum circuit determining device for a text provided in an embodiment of the present application. Optionally, the quantum circuit determining device for a text may be applied to the above electronic device.

The quantum circuit determining device for a text comprises a first obtaining device 91, a second obtaining device 92, and a determining device 93.

The first obtaining device 91 is configured for obtaining parts of speech of all words in a text corpus;

the second obtaining device 92 is configured for obtaining relevancies between all words according to semanteme of the text corpus;

the determining device 93 is configured for determining qubits and parameter-containing quantum logic gates of quantum circuits according to the parts of speech and the relevancies.

Please refer to FIG. 13, it is a text classifying device based on a quantum circuit provided in an embodiment of the present application. Optionally, the text classifying device may be applied to the electronic device described above.

The quantum circuit determining device for a text comprises:

a quantum circuit determining device 101 and a predicting unit 102.

The quantum circuit determining device 101 is configured for constructing quantum circuits for a text to be classified according to the above method;

The predicting unit 102 is configured for determining initialized parameter values of parameter-containing quantum logic gates in the quantum circuits according to meanings of all words in a text corpus, running the quantum circuits and obtaining a running result thereof, and obtaining a predictive classification result of the text corpus according to the running result.

It should be noted that the text classifying device provided in this embodiment can execute the method flow shown in the above method flow embodiment to achieve the corresponding technical effect. For the sake of brief description, where the present embodiment is not mentioned, the corresponding content in the above embodiment may be referred to.

Please refer to FIG. 14, it is a text classifying device provided in an embodiment of the present application. Optionally, the text classifying device may be applied to the electronic device described above.

The text classifying device comprises: a processing unit 201 and a predicting unit 202.

The processing unit 201 is configured for converting a text corpus into a target quantum circuit according to parts of speech, meanings and relevancies of all words in the text corpus.

Wherein, the relevancies comprise relevancies between each word and other words in the text corpus. Optionally, the processing unit 201 may execute the above S107.

The processing unit is further configured for obtaining a running result of the target quantum circuit, wherein the running result comprises an output result of a qubit when the target quantum circuit is run each time. Optionally, the processing unit 201 may execute the above S 108.

The predicting unit 202 is configured for obtaining a predictive classification result of the text corpus according to the running result. Optionally, the predicting unit 202 may execute the above S 109.

In a possible implementation, the processing unit 201 is further configured for: determining a sentence syntax type corresponding to the text corpus according to the parts of speech and the relevancies of all words in the text corpus; determining a target quantum framework according to the sentence syntax type, wherein the target quantum framework is a quantum framework corresponding to the sentence syntax type; determining an initial parameter of a logic gate in the target quantum framework according to meanings of all words in the text corpus; and setting a parameter of the logic gate in the target quantum framework according to the initial parameter, to complete conversion of the target quantum circuit. Optionally, the processing unit 201 may execute the above S107-1 to S107-4.

It should be noted that the text classifying device provided in this embodiment can execute the method flow shown in the above method flow embodiment to achieve the corresponding technical effect. For the sake of brief description, where the present embodiment is not mentioned, the corresponding content in the above embodiment may be referred to.

The embodiment of the present application further provides a storage medium, in which computer instructions and programs are stored, and the computer instructions and programs execute the text classifying method of the above embodiment when being read and run. The storage medium may include a memory, a flash memory, a register, a combination thereof, or the like.

An electronic device is provided below, which may be a computer or server device. As shown in FIG. 2, the electronic device may realize the above quantum circuit determining method for a text and the text classifying method; specifically, the electronic device comprises: a processor 10, a memory 11, and a bus 12. The processor 10 may be a CPU. The memory 11 is configured for storing one or more programs, and when one or more programs are executed by the processor 10, executing the text classifying method of the above embodiment.

In the embodiments provided herein, it should be understood that the disclosed apparatus and methods may be implemented in other ways. The device embodiments described above are merely illustrative. For example, the flowchart and block diagrams in the Figures illustrate the architecture, functionality, and operation of possible implementations of devices, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In addition, the functional modules in the embodiments of the present application may be integrated together to form an independent part, or may exist alone, or may be integrated with two or more modules to form an independent part.

The above-mentioned functions may also be stored in a computer-readable storage medium if implemented in the form of a software functional module and sold or used as a stand-alone product. Based on this understanding, the technical solution of the embodiment of the present disclosure in essence or part of the prior art contribution may be embodied in the form of a software product, the computer software product is stored in a storage medium and includes certain instructions to enable a device (which may be a computer, server, or network device etc.) to implement a resource change to perform all or part of the methods described in various embodiments of the present disclosure. The aforementioned storage media include: U disk, portable hard disk, read-only memory (ROM), random access memory (RAM), disk or optical disc and other media that can store program codes.

The above description is only a preferred embodiment of the present application and is not intended to limit the present application, and various modifications and changes can be made to the present application by those skilled in the art. Any modification, equivalent substitution, improvement, etc. within the spirit and principle of this application shall be included in the protection scope of the present application.

It will be apparent to those skilled in the art that the present application is not limited to the details of the above-described exemplary embodiments, and that it can be embodied in other specific forms without departing from the spirit or essential characteristics thereof. The present embodiments are, therefore, to be considered in all respects as exemplary and not restrictive. The scope of the present application is defined by the appended claims, rather than by the foregoing description, and thus all changes that come within the meaning and range of equivalency of the claims are intended to be embraced therein. Any reference signs in the claims shall not be construed as limiting the claim to which they relate.

**Claims**

1. A quantum circuit determining method for a text, comprising:

   obtaining parts of speech of all words in a text corpus;
   obtaining relevancies between all words according to semanteme of the text corpus; and
   determining qubits and parameter-containing quantum logic gates of quantum circuits according to the parts of speech and the relevancies.

2. The method of claim 1, wherein "obtaining relevancies between all words according to semanteme of the text corpus", comprises:

   obtaining a first relevance characterizing a dominant feature of the text corpus according to the semanteme of the text corpus; and
   obtaining a second relevance characterizing a recessive feature of the text corpus according to the semanteme of the text corpus.

3. The method of claim 2, wherein said "determining qubits and parameter-containing quantum logic gates of quantum circuits according to the parts of speech and the relevancies", comprises:

   determining partial-qubits and the parameter-containing quantum logic gates that represent words with each part of speech;
   processing the partial-qubits according to the first relevance to obtain entire qubits characterizing a structure of the text corpus, as the qubits of the quantum circuits; and
   determining quantum logic gates characterizing the recessive feature of the text corpus according to the second relevance.

4. The method of claim 3, wherein said "determining partial-qubits and the parameter-containing quantum logic gates that represent words with each part of speech", comprises:

   determining that a noun word is characterized as one qubit as well as an $Rx(\theta)$ gate, an $Rz(\theta)$ gate and an $Rx(\theta)$ gate acting sequentially on the qubit; or
   determining that an adjective word is characterized as two qubits and one IQP layer acting on the two qubits; or
   determining that a transitive verb word is characterized as three sequentially adjacent qubits and an IQP layer acting on two groups of two adjacent qubits,
   wherein: the IQP layer comprises a Hadamard gate acting on each qubit separately, and a $CRz(\theta)$ gate acting on the two qubits simultaneously.

5. The method of claim 3, wherein "processing the partial-qubits according to the first relevance to obtain entire qubits characterizing a structure of the text corpus, as the qubits of the quantum circuits", comprises:
   partially combining the partial-qubits characterizing a word with the first relevance so as to obtain entire qubits characterizing a structure of the text corpus, as the qubits of the quantum circuits.

6. The method of claim 3, wherein "determining quantum logic gates characterizing the recessive feature of the text corpus according to the second relevance", comprises:
   determining the quantum logic gates characterizing the recessive feature as a H gate and a CNOT gate according to the second relevance.

7. The method of any one of claims 1-6, wherein before "determining qubits and parameter-containing quantum logic gates of quantum circuits according to the parts of speech and the relevancies", the method further comprises:
   graphically representing the text corpus according to the parts of speech of all words in the text corpus and the relevancies between all words.

8. The method of claim 7, wherein "representing the text corpus graphically according to the parts of speech of all words in the text corpus and the relevancies between all words", comprises:

determining a structural initial graph of the text corpus according to the parts of speech of all words in the text corpus and the relevancies between all words, wherein all words with different parts of speech in the structural initial graph are placed horizontally, and the relevancies between all words are represented by a U-shaped broken line; and

simplifying the structural initial graph to obtain a structural sketch, wherein all words with different parts of speech in the structural sketch are placed in a staggered manner, and the relevancies between all words are represented by a U-shaped broken line or a straight line.

9. A text classifying method based on quantum circuits, wherein the method comprises:

constructing, according to the method of any one of claims 1 to 8, quantum circuits for a text to be classified;
determining initialized parameter values of parameter-containing quantum logic gates in the quantum circuits according to meanings of all words in a text corpus;
running the quantum circuits and obtaining a running result thereof; and
obtaining a predictive classification result of the text corpus according to the running result.

10. The text classifying method of claim 9, wherein before "determining initialized parameter values of parameter-containing quantum logic gates according to meanings of all words in a text corpus", the method further comprises:
training the quantum circuits to obtain parameter values corresponding to meanings of all words and for determining the initialized parameter values.

11. The text classifying method of claim 10, wherein said "training the quantum circuits to obtain parameter values corresponding to meanings of all words and for determining the initialized parameter values", comprises:

determining initialized parameter values of parameter-containing quantum logic gates to be trained according to the meanings of all words in the text corpus, running the parameter-containing quantum logic gates to be trained and obtaining a running result thereof;
obtaining the predictive classification result of the text corpus according to the running result;
correcting the initialized parameter values according to the predictive classification result to obtain updated parameter values, and then re-executing steps of "running the quantum circuits and obtaining a running result thereof' and "obtaining the predictive classification result of the text corpus according to the running result" until the predictive classification result is close to a true result; and
obtaining the updated parameter value when the predictive classification result is close to the true result, for determining parameter values of the initialized parameter values.

12. The text classifying method of claim 11, wherein said "obtaining the predictive classification result of the text corpus according to the running result" comprises:

obtaining a cost function corresponding to a real label according to the running result, and obtaining the predictive classification result of the text corpus according to the cost function, wherein the cost function is defined as follows:

$$C(\Theta) := \sum L(P)^T \bullet \log(L_{\Theta}(P))$$

wherein, LO(P) characterizes the running result, L (P) characterizes the real label, and C (Θ) characterizes the cost function.

13. The text classifying method of claim 11, wherein said "correcting the initialized parameter values according to the predictive classification result to obtain updated parameter values", comprises:
correcting the initialized parameter values according to the predictive classification result based on synchronous perturbation stochastic approximation algorithm to obtain the updated parameter value.

14. A text classifying method, wherein the method comprises:

converting a text corpus into a target quantum circuit according to parts of speech, meanings and relevancies of all words in the text corpus; wherein the relevancies comprise relevancies between each word and other words in the text corpus;
obtaining the running result of the target quantum circuit, wherein the running result comprises an output result of a qubit when the target quantum circuit is run each time; and
obtaining a predictive classification result of the text corpus according to the running result.

15. The text classifying method of claim 14, wherein said step of "converting a text corpus into a target quantum circuit according to parts of speech, meanings and relevancies of all words in the text corpus", comprises:

determining a sentence syntax type corresponding to the text corpus according to the parts of speech and the relevancies of all words in the text corpus;

determining a target quantum framework according to the sentence syntax type;

wherein the target quantum framework is a quantum framework corresponding to the sentence syntax type;

determining an initial parameter of a logic gate in the target quantum framework according to the meanings of all words in the text corpus; and setting a parameter of the logic gate in the target quantum framework according to the initial parameter, to complete the conversion of the target quantum circuit.

16. The text classifying method of claim 15, wherein the quantum frame comprises an IQP layer located between two qubits, and the IQP layer comprises a Hadamard gate acting on the two qubits separately, and a CRz gate acting on the two qubits simultaneously.

17. The text classifying method of claim 15, wherein before "converting a text corpus into a target quantum circuit according to parts of speech, meanings and relevancies of all words in the text corpus", the method further comprises:

obtaining a quantum framework to be trained corresponding to a training text according to the parts of speech and the relevancies of all words in the training text;

determining a training parameter of the logic gate in the quantum framework to be trained according to the meanings of all words in the training text;

setting a parameter of the logic gate in the quantum framework to be trained according to the training parameter to complete the conversion of the quantum circuit to be trained;

obtaining a training result of the quantum circuit to be trained;

obtaining a training classification result of the training text according to the training result; and

optimizing the training parameter according to a real label of the training text and the training classification result, wherein the optimized training parameter is used as the initial parameter of the logic gate in the target quantum framework when classifying the text.

18. The text classifying method of claim 17, wherein a cost function for optimizing the training parameter is expressed as:

$$C(\Theta) := \sum L(P)^T \bullet \log(L_\Theta(P))$$

wherein, LO(P) characterizes the predictive classification result, L (P) characterizes the real label, and C (Θ) characterizes the cost function.

19. The text classifying method of claim 14, wherein an expression for said "obtaining a predictive classification result of the text corpus according to the running result" is:

$$L_\Theta(P) := \frac{\left(I_\Theta^0(P), I_\Theta^1(P)\right)}{\sum_i I_\Theta^i(P)}$$

wherein, LO(P) characterizes the predictive classification result, $I_\Theta^0(P)$ characterizes the running result expressed by quantum state|0>state, and $I_\Theta^1(P))$ characterizes the running result expressed by quantum state|1>state.

20. A quantum circuit determining device for a text, **characterized by** comprising:

a first obtaining device configured for obtaining parts of speech of all words in a text corpus;

a second obtaining device configured for obtaining relevancies between all words according to semanteme of the text corpus; and

a determining device configured for determining qubits and parameter-containing quantum logic gates of quantum circuits according to the parts of speech and the relevancies.

21. A text classifying device, **characterized by** comprising:

a quantum circuit determining device configured for constructing quantum circuits for a text to be classified according to the method of any one of claims 1 to 8; and

a predicting unit configured for: determining initialized parameter values of parameter-containing quantum logic gates in the quantum circuits according to meanings of all words in a text corpus, running the quantum circuits and obtaining a running result thereof, and obtaining a predictive classification result of the text corpus according to the running result.

**22.** A text classifying device, comprising:

a processing unit configured for converting a text corpus into a target quantum circuit according to parts of speech, meanings and relevancies of all words in the text corpus;
wherein the relevancies comprise relevancies between each word and other words in the text corpus;
the processing unit is further configured for obtaining a running result of the target quantum circuit, wherein the running result comprises an output result of a qubit when the target quantum circuit is run each time; and
a predicting unit configured for obtaining a predictive classification result of the text corpus according to the running result.

**23.** The text classifying device of claim 22, wherein the processing unit is further configured for:

determining a sentence syntax type corresponding to the text corpus according to the parts of speech and the relevancies of all words in the text corpus;
determining a target quantum framework according to the sentence syntax type, wherein the target quantum framework is a quantum framework corresponding to the sentence syntax type;
determining an initial parameter of a logic gate in the target quantum framework according to meanings of all words in the text corpus; and
setting a parameter of the logic gate in the target quantum framework according to the initial parameter, to complete conversion of the target quantum circuit.

**24.** A computer-readable storage medium having a computer program stored therein, wherein the computer program is configured for implementing, when executed by a processor, the method of any one of claims 1 to 8, or 9 to 13, or 14 to 19.

**25.** An electronic device, **characterized by** comprising a processor and a memory, the memory is configured for storing one or more programs which implement, when executed by the processor, the method of any one of claims 1 to 8, or 9 to 13, or 14 to 19.

## original text

Word Embedding

The number of lines represents
the length of the text

The number of columns represents
the preset word embedding dimension

input to LSTM

LSTM   The number of cylinders
module  represents the number
of hidden layers of the LSTM

[0 0 ... 1]= Label 1...   [1 0 ... 0]=Label n

FIG.1

11

memory

13

communication
interface

10

processor

12

FIG.2

obtaining parts of speech of all words in a text corpus — S31

obtaining relevancies between all words according to semanteme of the text corpus — S32

determining qubits and parameter-containing quantum logic gates of quantum circuits according to the parts of speech and the relevancies — S33

FIG.3

obtaining parts of speech of all words in a text corpus — S31

obtaining relevancies between all words according to semanteme of the text corpus — S32

graphically representing the text corpus according to the parts of speech of all words in the text corpus and the relevancies between all words — S30

determining qubits and parameter-containing quantum logic gates of quantum circuits according to the parts of speech and the relevancies — S33

FIG.4

| Noun (subject) | transitive verb | | Noun (object) |
|---|---|---|---|
| n | n.r | n.l | n |

s

FIG.5a

FIG.5b

FIG.5c

FIG.6a

FIG.6b

FIG.6c

FIG.7a

FIG.7b

FIG.7c

| | |
|---|---|
| constructing quantum circuits for a text to be classified | S81 |

| | |
|---|---|
| determining initialized parameter values of parameter-containing quantum logic gates in the quantum circuits according to meanings of all words in a text corpus, running the quantum circuits and obtaining a running result thereof, and obtaining a predictive classification result of the text corpus according to the running result | S83 |

FIG.8

| | |
|---|---|
| converting a text corpus into a target quantum circuit according to parts of speech, meanings and relevancies of all words in the text corpus | S107 |
| obtaining a running result of the target quantum circuit | S108 |
| obtaining a predictive classification result of the text corpus according to the running result | S109 |

FIG.9

S107

determining a sentence syntax type corresponding to the text corpus according to the parts of speech and the relevancies of all words in the text corpus — S107-1

determining a target quantum framework according to the sentence syntax type — S107-2

determining an initial parameter of a logic gate in the target quantum framework according to the meanings of all words in the text corpus — S107-3

setting a parameter of the logic gate in the target quantum framework according to the initial parameter, to complete the conversion of the target quantum circuit — S107-4

obtaining a running result of the target quantum circui — S108

obtaining a predictive classification result of the text corpus according to the running result — S109

FIG.10

obtaining a quantum framework to be trained corresponding to a training text according to the parts of speech and the relevancies of all words in the training text — S101

determining a training parameter of the logic gate in the quantum framework to be trained according to the meanings of all words in the training text — S102

setting a parameter of the logic gate in the quantum framework to be trained according to the training parameter to complete the conversion of the quantum circuit to be trained — S103

obtaining a training result of the quantum circuit to be trained — S104

obtaining a training classification result of the training text according to the training result — S105

optimizing the training parameter according to a real label of the training text and the training classification result — S106

converting a text corpus into a target quantum circuit according to parts of speech, meanings and relevancies of all words in the text corpus — S107

obtaining a running result of the target quantum circuit — S108

obtaining a predictive classification result of the text corpus according to the running result — S109

FIG.11

first obtaining device — 91

second obtaining device — 92

determining device — 93

FIG.12

quantum circuit determining device — 101

predicting unit — 102

FIG.13

processing unit — 201

predicting unit — 202

FIG.14

## INTERNATIONAL SEARCH REPORT

| | International application No. |
|---|---|
| | **PCT/CN2022/125081** |

| A. | CLASSIFICATION OF SUBJECT MATTER |
|---|---|

G06F 16/33(2019.01)i

According to International Patent Classification (IPC) or to both national classification and IPC

| B. | FIELDS SEARCHED |
|---|---|

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

VEN; CNABS; CNTXT; WOTXT; EPTXT; USTXT; CNKI; IEEE: 文本, 量子线路, 语料, 词汇, 词性, 语义, 关联, 量子比特, 逻辑门, 服务器, probability, glossary, associate, bit, logical, server, text, quanta, API

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 112905736 A (ZHENGZHOU UNIVERSITY OF LIGHT INDUSTRY) 04 June 2021 (2021-06-04)<br>  description, paragraphs [0046]-[0076] | 1-25 |
| A | CN 112884153 A (HUAWEI TECHNOLOGIES CO., LTD.) 01 June 2021 (2021-06-01)<br>  entire document | 1-25 |
| A | CN 112712901 A (XIJING UNIVERSITY) 27 April 2021 (2021-04-27)<br>  entire document | 1-25 |
| A | CN 111027702 A (HEFEI ORIGIN QUANTUM COMPUTING TECHNOLOGY CO., LTD.) 17 April 2020 (2020-04-17)<br>  entire document | 1-25 |
| A | US 2018267958 A1 (ABBYY DEVELOPMENT LLC.) 20 September 2018 (2018-09-20)<br>  entire document | 1-25 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 December 2022** | **09 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/125081**

| Patent document cited in search report | | | Publication date (day/month/year) | Patent family member(s) | | | Publication date (day/month/year) |
|---|---|---|---|---|---|---|---|
| CN | 112905736 | A | 04 June 2021 | None | | | |
| CN | 112884153 | A | 01 June 2021 | None | | | |
| CN | 112712901 | A | 27 April 2021 | None | | | |
| CN | 111027702 | A | 17 April 2020 | None | | | |
| US | 2018267958 | A1 | 20 September 2018 | RU | 2662688 | C1 | 26 July 2018 |

Form PCT/ISA/210 (patent family annex) (January 2015)

**REFERENCES CITED IN THE DESCRIPTION**

**Patent documents cited in the description**

- CN 202111194504
- CN 202111193343